Europäisches Patentamt

European Patent Office

Office européen des brevets

(19)

(11) Veröffentlichungsnummer: **0 219 490 B1**

(12) **EUROPÄISCHE PATENTSCHRIFT**

(45) Veröffentlichungstag der Patentschrift: **24.04.91**

(51) Int. Cl.⁵: **F16J  15/34, B25B 27/30**

(21) Anmeldenummer: **86890283.4**

(22) Anmeldetag: **17.10.86**

(54) **Wellenhülsen- und/oder Patronengleitringdichtung.**

(30) Priorität: **18.10.85 AT 3027/85**

(43) Veröffentlichungstag der Anmeldung:
**22.04.87 Patentblatt  87/17**

(45) Bekanntmachung des Hinweises auf die
Patenterteilung:
**24.04.91 Patentblatt  91/17**

(84) Benannte Vertragsstaaten:
**AT BE CH DE ES FR GB GR IT LI LU NL SE**

(56) Entgegenhaltungen:
**DE-A- 2 816 930**
**FR-A- 1 518 606**
**FR-A- 2 125 949**

(73) Patentinhaber: **Stöller, Walter**
**Leystrasse 23**
**A-2300 Wien XX(AT)**

(72) Erfinder: **Stöller, Walter**
**Leystrasse 23**
**A-2300 Wien XX(AT)**

(74) Vertreter: **Krause, Ernst, Dipl.-Ing. et al**
**Dipl.- Ing. Krause, Ernst Dipl. Ing. Casati,**
**Wilhelm Patentanwälte Amerlingstrasse 8**
**A-1061 Wien(AT)**

## Beschreibung

Die Erfindung betrifft eine Wellenhülsen- und/oder Patronengleitringdichtung, deren aus bevorzugt nicht elastomerem Material bestehendes Dichtelement durch mindestens eine Feder in axialer Richtung belastbar ist, wobei das Dichtelement gegebenenfalls über einen Druckring, an dem die mindestens eine Feder und das Dichtelement abgestützt sind, belastbar ist und die mindestens eine Feder im Einbauzustand durch ein Halteelement in gespannter Lage gehalten ist.

Bei Dichtungen dieser Art, die etwa aus der FR-A-1518606 bekannt wurden, treten vor allem bei der Montage Schwierigkeiten auf, weil die Federn durch das Halteelement zwar gespannt gehalten sind, dadurch, daß das Halteelement an gehäusefesten Anschlägen anliegt, es zur Belastung des Dichtelementes jedoch einer Axialverschiebung des Halteelementes weg von den Anschlägen bedarf, um die Federn weiter zusammenzudrücken und auf das Dichtelement einen entsprechenden Druck auszuüben. Der Raumbedarf der Federn beim Einbauen ist damit nicht minimal, womit auch die Länge der gesamten Gleitringdichtung nicht minimal ist, sodaß der Zusammenbau problematisch ist, wenn die Dichtung in unzugängliche Stopfbüchsen einzubauen ist. Die Problematik ergibt sich hiebei vor allem aus dem Raumbedarf der Belastungsfedern, die bei der bekannten Dichtung zwar im gespannten Zustand auf die Welle oder einen Stößelaufgeschoben werden müssen, wobei jedoch eine weitere Komprimierung der Federn erforderlich wird, um das Dichtelement der Gleitringdichtung zu belasten.

Durch die Erfindung soll nun eine Dichtung der eingangs erwähnten Art geschaffen werden, die leicht und problemlos zusammengebaut werden kann und die dazu dient, vor allem bei unzugänglichen Stopfbüchsen eine leichte Montage zu sichern. Erreicht wird dieses Ziel, wenn gemäß der Erfindung bei einer Dichtung der eingangs erwähnten Art, das Halteelement bei der Temperatur eines heißen Mediums dem die mindestens eine Feder ausgesetzt ist, seine Haltekraftverliert, sodaß die mindestens eine Feder expandiert und das Dichtelement belastet.

Durch die erfindungsgemäße Ausbildung der Dichtung wird erreicht, daß für den Einbau der Belastungsfeder bzw. der Belastungsfedern nur ein geringer Raumbedarf erforderlich ist, wobei der Einbau ohne Ausübung wesentlicher Kräfte durch einfaches Einsetzen der in gespanntem Zustand für die Belastung des Dichtelementes befindlichen Feder bzw. Federn erfolgen kann.

In weiterer Ausgestaltung des Erfindungsgegenstandes kann vorgesehen werden, daß bei Dichtungen, die von mindestens einer Biege-(Teller-)Feder Gebrauch machen, das Halteelement eine Kleberschicht ist, die bei mehreren Biegefedern zwischen den aufeinandergepreßten Stirnflächen der Biegefedern liegt, bei Anordnung nur einer Biegefeder hingegen zwischen der Biegefeder und der Stirnfläche eines Tragringes angeordnet ist, der gegebenenfalls den Druckring der Dichtung bildet. Durch diese Ausgestaltung wird auf besonders einfache Weise die vorgespannte Lage der Biegefeder bzw. der Biegefedern gesichert.

In weiterer Ausbildung der Erfindung kann das Halteelement eine Kleberschicht oder eine insbes. eutektische Metallegierung oder ein Metall sein, das den Ringspalt zwischen zwei Federtellern zumindest örtlich überbrückt, von welchen der eine in den anderen einschiebbar ist und gegen welche die Feder bzw. Federn abgestützt ist bzw. sind. Das Halteelement kann in allen Ausführungen von einer Klebschicht, z.B. einem Mehrkomponentenkleber, gebildet sein. Als Halteelement kommt jedoch auch eine insbes. eutektische Metallegierung oder ein Metall als solches in Frage. Bevorzugt kann dabei etwa Zinn oder Wismut Anwendung finden.

Ein weiterer wesentlicher Erfindungsgegenstand ist ein Federpaket für den Einbau in Wellenhülsen- und/oder Patronengleitringdichtungen zur Axialbelastung des Dichtelementes. Durch die besondere Gestaltung des Federpaketes soll vor allem die Montage des den Dichtring belastenden Federelementes erleichtert werden. Bisnun wurden die Federn im expandierten, also spannungsfreien Zustand, eingebaut. Der dabei für den Einbau erforderliche Platzbedarf war bedeutend. Darüberhinaus mußten die Federn nach dem Einbau gespannt werden, was weitere Arbeiten erforderlich machte.

Durch eine besondere Ausgestaltung eines Federpaketes soll nun diesem Mangel abgeholfen werden. Ein solches Federpaket weist dabei erfindungsgemäß ein Halteelement auf, das die Feder bzw. die Federn in komprimierter Lage hält und das bei einer vorgegebenen Temperatur seine Haltekraft verliert, sodaß die Feder bzw. die Federn erst bei Erreichen dieser Temperatur expandieren. Bei der Montage wird das Federpaket einfach eingeschoben und gegen Axialverschiebung gesichert. Wird dann das Federpaket erwärmt, so verliert das Halteelement seine Haltekraft und die Federn können expandieren, wodurch sie das Dichtelement dann belasten. Die Erwärmung kann dabei auch durch äußere Wärmezufuhr erfolgen oder aber, soferne das Federpaket in eine Gleitringdichtung eingebaut wird, die ein heißes Medium abdichten soll, auch durch das heiße Medium erfolgen, wenn dieses das Federpaket umspült. Das Federpaket kann erfindungsgemäß auch so gestaltet werden, daß ein aus zwei Teilen bestehendes Gehäuse zur Aufnahme der Feder bzw. der Federn vorgesehen ist, wobei ein Gehäuseteil verschiebbar in dem anderen Gehäuseteil gelagert ist und das Haltemittel in Form eines Klebstoffes, einer insbes. eutektischen Metallegierung oder eines Metalles, im Ringspalt zwischen den beiden Gehäuseteilen, gegebenenfalls nur an diskreten Stellen im Ringspalt, angeordnet ist, wobei sich die Feder bzw. die Federn gegen jeden der Gehäuseteile abstützen. Selbstverständlich kann das Haltemittel auch den Ringspalt voll in Umfangsrichtung ausfüllen. Es genügt jedoch auch, wenn nur lokal im Ringspalt das Haltemittel vorhanden ist und an den den Ringspalt begrenzenden Flächen der Gehäuseteile haftet. Diese Flächen können auch mit Vertiefungen versehen sein, in welche das Haltemittel eindringt und solcherart einen sicheren Halt gibt. Das Haltemittel kann auch von Stiften gebildet werden, welche die durch den Ringspalt voneinander getrennten Gehäuseteile durchsetzen und von Bohrungen in den Gehäuseteilen aufgenommen sind. Das Material dieser Stifte kann dann eine Metallegierung cder ein Metall, beispielsweise Zinn oder Wismut, sein. Bei Erhitzung verlieren die Stifte ihre Festigkeit und die Gehäuseteile können sich gegeneinander bewegen, wodurch die im Gehäuse befindliche Feder bzw. die Federn expandieren.

In spezieller weiterer Ausgestaltung des Federpaketes können die Gehäuseteile schalenförmig ausgebildet sein, wobei der Boden der Schalen jeweils eine Durchbrechung für den Durchtritt der Welle aufweist und die Feder bzw. Federn sich am Boden der Schalen abstützen. Solcherart entsteht ein besonders kompaktes Federpaket, in dem die Federn vor ihrer Verwendung geschützt untergebracht sind. Ebenso kann jedoch ein Schutz der Federn auch erzielt werden, wenn nur ein Gehäuseteil als Schale ausgebildet ist und der andere Gehäuseteil ein in der Schale gleitbarer Ring ist. Die Federn sind dabei am Boden der mit einer Durchbrechung für den Durchtritt der Welle versehenen Schale und am Ring abgestützt.

In besonderer Ausgestaltung des Federpaketes kann der Ring mit einer Vielzahl von umfänglich voneinander beabstandeten Sackbohrungen versehen sein, in welche Schraubenfedern eingesetzt sind, die mit ihren Enden die Stirnfläche des Ringes, in welche die Sackbohrungen münden, im expandierten Zustand überragen und mit diesen Enden am Boden der Schale abgestützt sind. Diese Ausgestaltung erlaubt die Verwendung einer Vielzahl von Schraubenfedern als Belastungsfedern für den Dichtring der Gleitringdichtung. Der Ring ist dabei wieder durch das temperaturempfindliche Halteelement im Gehäuse gesichert, u.zw. bei komprimierten Schraubenfedern.

Ein weiterer Gegenstand der Erfindung ist die Verwendung eines durch ein Halteelement, das bei einer vorgegebenen Temperatur seine Haltekraft verliert, in komprimiertem Zustand gehaltenen Federpakets, in Wellenhülsen- und/oder Patronengleitringdichtungen zur bevorzugt axialen Belastung des Dichtelementes.

Die Erfindung wird nachstehend anhand von in der Zeichnung dargestellter Ausführungsbeispielen näher erläutert.

Es zeigen:

Fig. I einen Axialschnitt durch eine erfindungsgemäß ausgestaltete Gleitringdichtung bei in komprimiertem Zustand befindlichen Federn,

Fig. 2 in gleicher Darstellung wie Fig. I die Gleitringdichtung, jedoch in expandiertem Zustand der Federn, nachdem das Halteelement durch Wärmeeinwirkung seine Haltekraft verloren hat, die

Fig. 3 und 4 ein Detail aus Fig. I, bei dem lediglich eine Biegefeder Verwendung findet, die

Fig. 5 bis 7,jeweils in einem Axialschnitt, verschiedene Ausführungsformen von Federpaketen zur Verwendung in Gleitringdichtungen, beispielsweise gemäß den Fig. I und 2 zwecks Belastung des Dichtelementes in axialer Richtung.

Gemäß den Fig. I und 2 ist eine Dichtungsvorrichtung in einer Wellenhülsen- und/oder Patronengleitringdichtung, die auf einerWelle 4 sitzt, vorgesehen. Der Dichtungsträger ist dabei mit 1 bezeichnet. Für die Federn 5, 6, die im dargestellten Ausführungsbeispiel Biegefedern (Tellerfedern) sind, ist ein Träger 2 vorgesehen, der mittels Schrauben 3 mit dem Dichtungsträger 1 verbunden ist. In dem Raum l0, der durch ein Dichtelement 8 abgedichtet werden soll, herrscht eine erhöhte Temperatur. Das Dichtelement 8 besteht aus nichtelastomerem Material, beispielsweise aus unelastischem Graphit, der die Form eines O-Ringes besitzen kann.

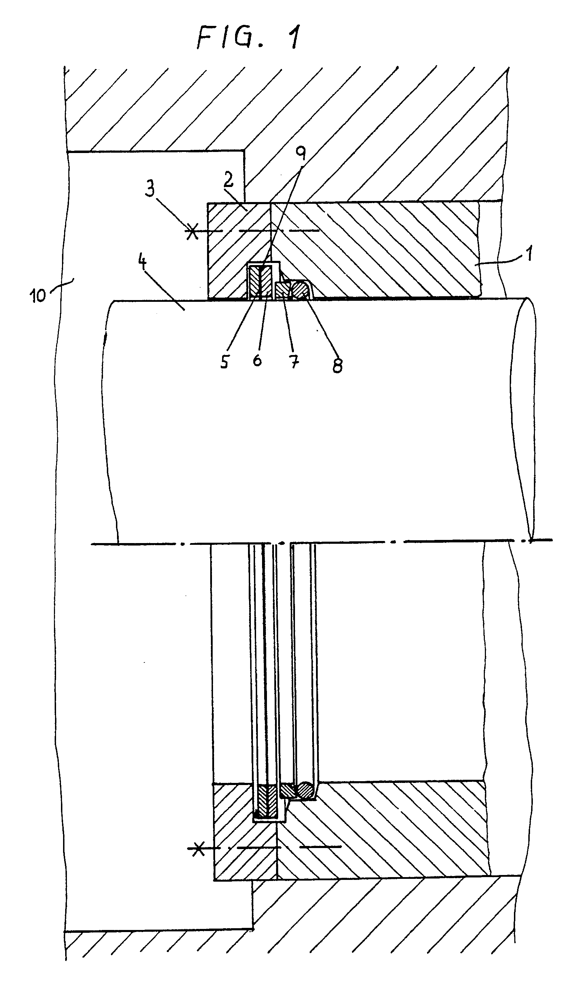

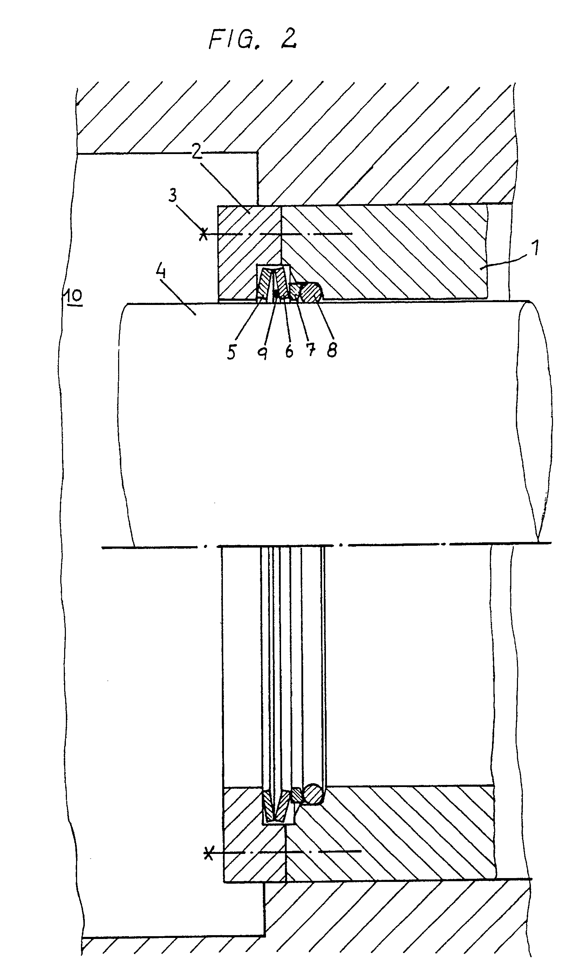

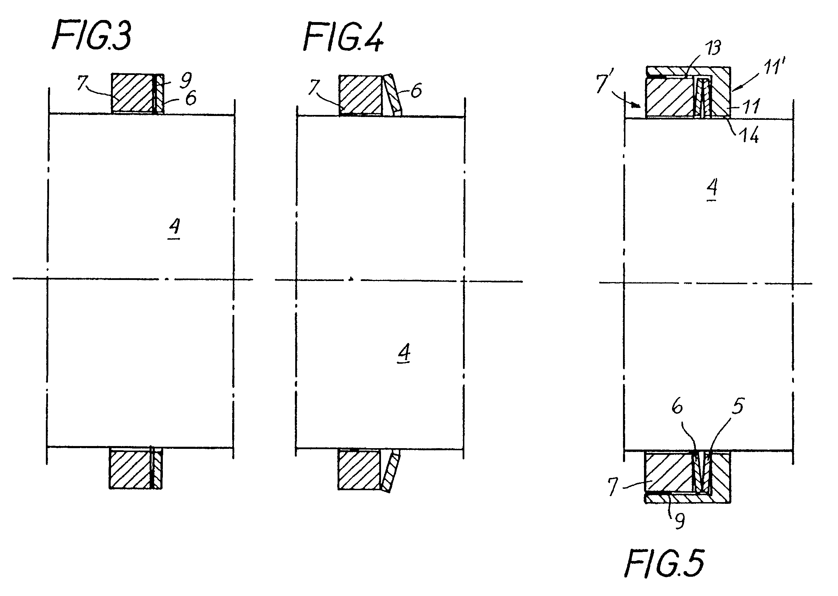

Bei der in Fig. I wiedergegebenen Lage sind die Biegefedern 5, 6 durch ein Halteelement 9, z.B. einen Kleber, in komprimiertem Zustand gehalten, bei dem ihre Stirnflächen aufeinander liegen. In diesem Zustand wurden die Federn 5, 6 auf die Welle 4 aufgesetzt, wonach der Träger 2 durch die Schrauben 3 am Dichtungsträger I fixiert wurde. Geht die Gleitringdichtung in Betrieb, so herrscht im Raum l0 erhöhte Temperatur. Das abzudichtende Medium dringt bis zu den Federn 5, 6 vor, und unter der Hitzeeinwirkung des abzudichtenden Mediums verliert das Halteelement 9 seine Haltekraft, und die Federn expandieren und nehmen eine Lage ein, wie sie in Fig. 2 gezeichnet ist. Die eine Biegefeder 5 stützt sich hiebei am Träger 2 ab und die andere Feder 6 an einem Druckring 7, der den Federdruck auf das Dichtelement 8 überträgt, das den Ringspalt zwischen der Welle 4 und dem Träger 1 abdichtet. Das Halteelement kann auch von einer eutektischen Metallegierung oder einem Metall gebildet werden, das bei der Temperatur des

im Raum I0 befindlichen Mediums sich erweicht und dadurch seine Haltekraft verliert. Wird ein Kleber, z.B. ein Mehrkomponentenkleber, verwendet, so kann dieser unter Wärmeeinwirkung verdampfen. Wird nur eine Biegefeder verwendet, so kann eine Anordnung getroffen werden, wie sie aus den Fig. 3 und 4 ersichtlich ist. In diesem Fall wird die Biegefeder 6 in flachgedrücktem, also komprimiertem Zustand, durch das Haltemittel 9 an einem Tragring gehalten, der gegebenenfalls gleich als Druckring 7 ausgebildet sein kann.

In dem Zustand gemäß Fig. 3 kann die Feder auf die Welle 4 aufgeschoben werden und das aus den Teilen 6 und 7 bestehende Belastungselement in die Dichtung eingebaut werden. Erfolgt dann eine Erwärmung, so verliert das Halteelement 9 seine Haltekraft und die Biegefeder 6 expandiert, wobei sie die in Fig. 4 ersichtliche Lage einnimmt, in der sie den Dichtring axial belasten kann.

Die Belastungsfeder bzw. Belastungsfedern können auch als Federpaket für den Einbau in die Dichtung vorbereitet sein. Die Feder 6' bzw. die Federn 5, 6, 6" sind dabei in einem aus zwei Teilen 7', II' bestehenden Gehäuse untergebracht. Der Gehäuseteil 7' ist dabei verschiebbar in dem anderen Gehäuseteil II' gelagert. Das Haltemittel ist mit 9 bezeichnet und kann, wie dies bereits erwähnt wurde, von einem Klebstoff oder einer insbes. eutektischen Metallegierung oder einem Metall gebildet werden. Das Haltemittel 9 wird, nachdem die Feder bzw. die Federn gespannt, also komprimiert wurde, in den Ringspalt I3 zwischen den beiden Gehäuseteilen 7', II' eingebracht und dort erhärten gelassen. Dadurch werden die beiden Gehäuseteile 7', II' gegeneinander fixiert und die zwischen den Gehäuseteilen liegende Feder bzw. die Federn in gespanntem Zustand gehalten. Das Haltemittel 9 muß dabei nicht den Ringspalt I3 zur Gänze ausfüllen, sondern kann auch nur an diskreten Stellen in diesem Ringspalt vorhanden sein. Die Feder 6' bzw. die Federn 6" stützen sich an jedem der Gehäuseteile 7', II' ab. Die Feder 6' ist dabei eine Schraubenfeder, deren Durchmesser etwas größer ist als der Durchmesser der Welle 4, auf welche das Federpaket beim Einbau in die Dichtung aufgeschoben wird. Die Gehäuseteile 7', II' sind schalenförmig ausgebildet,und der Boden der Schalen weist eine Durchbrechung I4 für den Durchtritt der Welle auf.

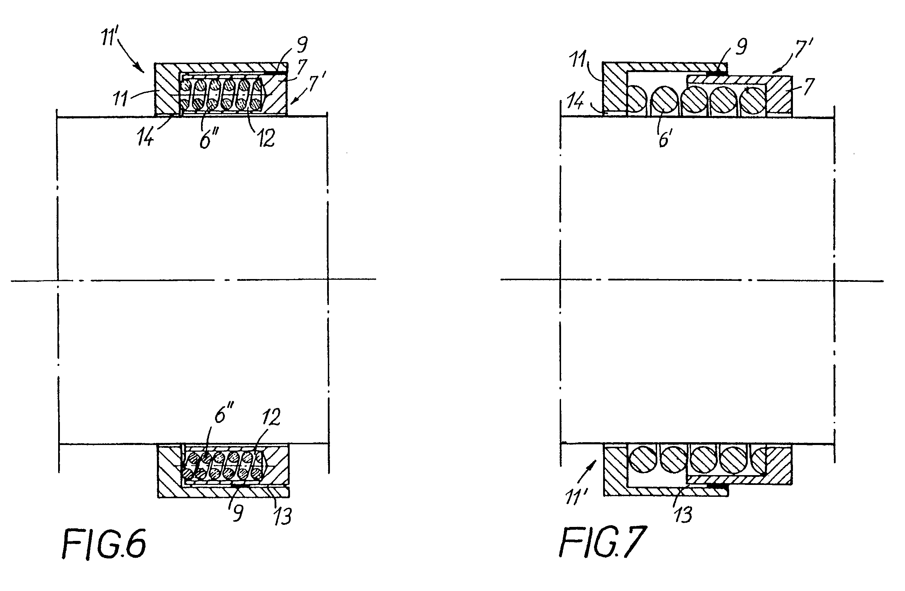

Bei der Ausführung nach den Fig. 5 und 6 ist einer der Gehäuseteile, nämlich der Gehäuseteil II' als Schale ausgebildet und der andere Gehäuseteil 7' als in der Scheibe gleitbarer Ring 7. Dieser Ring 7 kann im eingebauten Zustand als Druckring das Dichtelement 8 belasten. In Fig. 5 sind als Federn Tellerfedern 5, 6 vorgesehen, und in Fig. 6 sind als Belastungsfedern mehrere über den Umfang des Ringes 7 verteilt angeordnete Schraubenfedern 6"

vorgesehen. Diese Schraubenfedern sitzen in Sackbohrungen I2 des Ringes 7. Im entspannten Zustand überragen sie die Stirnfläche des Ringes 7, von dem die Sackbohrungen I2 ausgehen.

## Ansprüche

1. Wellenhülsen- und/oder Patronengleitringdichtung, deren aus bevorzugt nicht elastomerem Material bestehendes Dichtelement (8) durch mindestens eine Feder (5, 6; 6', 6") in axialer Richtung belastbar ist, wobei das Dichtelement (8) gegebenenfalls über einen Druckring (7), an dem die mindestens eine Feder (5, 6; 6', 6") und das Dichtelement (8) abgestützt sind, belastbar ist und die mindestens eine Feder (5, 6; 6', 6") im Einbauzustand durch ein Halteelement (9) in gespannter Lage gehalten ist, dadurch gekennzeichnet, daß das Halteelement (9) bei der Temperatur eines heißen Mediums, dem die mindestens eine Feder (5, 6 ; 6', 6") ausgesetzt ist, seine Haltekraft verliert, so daß die mindestens eine Feder (5, 6; 6', 6") expandiert und das Dichtelement (8) belastet.

2. Dichtung nach Anspruch I, mit mindestens einer Biege(Teller-)-Feder (5,6), dadurch gekennzeichnet, daß das Halteelement (9) eine Kleberschicht ist, die bei mehreren Biege(Teller-)-Federn (5,6) zwischen den aufeinandergepreßten Stirnflächen der Biegefedern (5,6) liegt (Fig. I,2), bei Anordnung nur einer Biegefeder (6) jedoch zwischen der Biegefeder (6) und der Stirnfläche eines Tragringes, der gegebenenfalls den Druckring (7) der Dichtung bildet (Fig. 3,4).

3. Dichtung nach Anspruch I, dadurch gekennzeichnet, daß das Halteelement (9) eine Kleberschicht oder eine insbes. eutektische Metallegierung, oder ein Metall ist, das den Ringspalt (I3) zwischen zwei Federtellern (7', II') zumindest örtlich überbrückt, von welchen der eine in den anderen einschiebbar ist und gegen welche die Feder (6') bzw. Federn (5,6; 6") abgestützt ist bzw. sind (Fig. 5 bis 7).

4. Federpaket für den Einbau in Wellenhülsen- und/oder Patronengleitringdichtungen zur Axialbelastung des Dichtelementes, gekennzeichnet durch ein Halteelement (9), das die Feder (6; 6' Fig. 3,4,7) bzw. die Federn (5,6; 6", Fig. I,2; 5,6) in komprimierter Lage hält und das bei einer vorgegebenen Temperatur seine Haltekraft verliert, so daß die Feder (6; 6') bzw. die Federn (5,6; 6") erst bei Erreichen dieser Temperatur expandieren.

5. Federpaket nach Anspruch 4, dadurch gekennzeichnet, daß bei einem Biegefederpaket, wenn es mehrere Biegefedern (5,6) enthält, die Biegefedern beispielsweise mit ihren Stirnflächen aneinanderliegen (Fig. I), und das Halteelement (9) ein die Stirnflächen der Biegefedern (5,6) miteinander verklebender Klebstoff ist,bei nur einer Biegeder (6, Fig. 3,4), der Klebstoff die Stirnfläche der Biegefeder (6) jedoch mit einem Tragring verklebt, der gegebenenfalls den Druckring (7) der Dichtung bildet.

6. Federpaket nach Anspruch 4 oder 5, dadurch gekennzeichnet, daß ein aus zwei Teilen (7', II') bestehendes Gehäuse zur Aufnahme der Feder (6') bzw. Federn (5,6;6") vorgesehen ist, daß ein Gehäuseteil (7') verschiebbar in dem anderen Gehäuseteil (II') gelagert ist und das Haltemittel (9) in Form eines Klebstoffes, einer insbes. eutektischen Metallegierung oder eines Metalles im Ringspalt (I3) zwischen den beiden Gehäuseteilen (7',II'), gegebenenfalls nur an diskreten Stellen im Ringspalt (I3) angeordnet ist und daß die Feder (6') bzw. Federn (5,6; 6") sich gegen jeden der Gehäuseteile (7',II') abstützen (Fig. 5 - 7).

7. Federpaket nach Anspruch 6, dadurch gekennzeichnet, daß die Gehäuseteile (7',II') schalenförmig ausgebildet sind, wobei der Boden der Schalen jeweils eine Durchbrechung (I4) für den Durchtritt der Welle (4) aufweist und die Feder (6') bzw. Federn sich am Boden der Schalen abstützen (Fig. 7).

8. Federpaket nach Anspruch 6, dadurch gekennzeichnet, daß ein Gehäuseteil (II') als Schale ausgebildet ist und der andere Gehäuseteil (7') ein in der Schale (II) gleitbarer Ring (7) ist, wobei die Federn (5,6; 6") am Boden der mit einer Durchbrechung (I4) für den Durchtritt der Welle (4) versehenen Schale (II) und am Ring (7) abgestützt sind.

9. Federpaket nach Anspruch 8, dadurch gekennzeichnet, daß der Ring (7) mit einer Vielzahl von umfänglich voneinander beabstandeten Sackbohrungen (I2) versehen ist, in welche Schraubenfedern (6") eingesetzt sind, die mit ihren einen Enden die Stirnfläche des Ringes (7), in welche die Sackbohrungen (I2) münden, überragen und mit diesen Enden am Boden der Schale (II') abgestützt sind (Fig. 6).

10. Verwendung eines durch ein Halteelement, das bei einer vorgegebenen Temperatur seine Haltekraft verliert, in komprimiertem Zustand gehaltenen Federpakets in Wellenhülsen- und/oder Patronengleitringdichtungen zur bevorzugt axialen Belastung des Dichtelementes.

## Claims

1. Shaft sleeve seal and/or cartridge mechanical seal, the sealing element (8) of which is preferably composed of non-elastomeric material and can be loaded in the axial direction by at least one spring (5, 6; 6', 6"), it being possible for the sealing element (8) to be loaded, if appropriate, via a pressure ring (7), on which the at least one spring (5, 6; 6', 6") and the sealing element (8) are supported, and the at least one spring (5, 6; 6', 6") being held in a stressed position by a holding element (9) in the installed state, characterised in that the holding element (9) loses its holding power at the temperature of a hot medium to which the at least one spring (5, 6; 6', 6") is subjected, with the result that the at least one spring (5, 6; 6', 6") expands and loads the sealing element (8).

2. Seal according to Claim 1, having at least one spiral (cup) spring (5, 6), characterised in that the holding element (9) is an adhesive layer which, in the case of a plurality of spiral (cup) springs (5, 6) lies between the end faces of the spiral springs (5, 6) which are pressed on to one another (Figs. 1, 2), but, in the case of only one spiral spring (6), lies between the spiral spring (6) and the end face of a bearing ring which, if appropriate, forms the pressure ring (7) of the seal (Figs. 3, 4).

3. Seal according to Claim 1, characterised in that the holding element (9) is an adhesive layer or a metal alloy, in particular a eutectic metal alloy, or a metal which bridges the annular gap (13) at least locally between two spring plates (7', 11'), one of which can be inserted in the other and against which the spring (6') or springs (5, 6; 6") is or are supported (Figs. 5 to 7).

4. Spring assembly for installation in shaft sleeve and/or cartridge mechanical seals for axial loading of the sealing element, characterised by a holding element (9) which holds the spring (6; 6' Figs. 3, 4, 7) or the springs (5, 6; 6", Figs. 1, 2; 5, 6) in a compressed position and which loses its holding power at a predetermined temperature, with the result that the spring (6; 6") or the springs (5, 6; 6") only expand when this temperature is reached.

5. Spring assembly according to Claim 4, characterised in that, in the case of a spiral spring assembly, if it contains a plurality of spiral springs (5, 6), the spiral springs lie, for example, with their end faces on one another (Fig. 1), and the holding element (9) is an adhesive bonding the end faces of the spiral springs (5, 6) together, but, in the case of only one spiral spring (6, Figs. 3, 4), the adhesive bonds the end face of the spiral spring (6) to a bearing ring which, if appropriate, forms the pressure ring (7) of the seal.

6. Spring assembly according to Claim 4 or 5, characterised in that a housing consisting of two parts (7', 11') is provided to accommodate the spring (6') or springs (5, 6; 6"), in that one housing part (7') is mounted displaceably in the other housing part (11') and the holding means (9) in the form of an adhesive, a metal alloy, in particular a eutectic metal alloy, or a metal is arranged in the annular gap (13) between the two housing parts (7', 11'), if appropriate, only at discrete points in the annular gap (13), and in that the spring (6') or springs (5, 6; 6") are supported against each of the housing parts (7', 11') (Figs. 5 - 7).

7. Spring assembly according to Claim 6, characterised in that the housing parts (7', 11') are of shell-shaped construction, the bottom of the shells each having a hole (14) for the shaft (4) to pass through and the spring (6') or springs being supported on the bottom of the shells (Fig. 7).

8. Spring assembly according to Claim 6, characterised in that one housing part (11') is constructed as a shell and the other housing part (7') is a ring (7) which can slide in the shell (11), the springs (5, 6; 6") being supported on the bottom of the shell (11), provided with a hole (14) for the shaft (4) to pass through, and on the ring (7).

9. Spring assembly according to Claim 8, characterised in that the ring (7) is provided with a multiplicity of blind bores (12) which are spaced apart around the circumference and in which coil springs (6") are inserted which project with their one ends over the end face of the ring (7), into which the blind bores (12) open out, and are supported by these ends on the bottom of the shell (11') (Fig. 6).

10. Use of a spring assembly which is held in the compressed state by a holding element, which loses its holding power at a predetermined temperature, in shaft sleeve and/or cartridge mechanical seals for preferably axial loading of the sealing element.

## Revendications

1. Garniture mécanique d'étanchéité pour gaine d'arbre ou cartouche, dont l'élément d'étanchéité (8) composé d'un matériau de préférence non élastomère peut être chargé par au moins un ressort (5, 6 ; 6', 6") dans le sens axial, l'élément d'étanchéité (8) pouvant le cas échéant être chargé par l'intermédiaire d'une bague de serrage (7), sur laquelle sont appuyés au moins un ressort (5, 6 ; 6', 6") et l'élément d'étanchéité (8) et le ressort au moins (5, 6 ; 6', 6") dans l'état monté est maintenu par un élément de maintien (9) à l'état tendu, caractérisée en ce que l'élément de maintien (9) perd sa force de maintien à la température d'une substance chaude, à laquelle le ressort au moins (5, 6 ; 6', 6") est exposé, de sorte que le ressort au moins (5, 6 ; 6', 6") se détend et charge l'élément d'étanchéité (8).

2. Garniture d'étanchéité selon la revendication 1, avec au moins un ressort (en rondelle) (5, 6), caractérisée en ce que l'élément de maintien (9) est une couche de colle, qui est située pour plusieurs ressorts (en rondelle) (5, 6) entre les faces appliquées l'une contre l'autre des ressorts (5, 6) (Figs. 1, 2), mais lors de l'emploi d'un seul ressort (6) entre le ressort (6) et la face d'un anneau porteur, qui forme le cas échéant le cône de serrage (7) de la garniture d'étanchéité (Figs. 3, 4).

3. Garniture d'étanchéité selon la revendication 1, caractérisée en ce que l'élément de maintien (9) est une couche de colle ou un alliage métallique en particulier eutectique, ou un métal, qui traverse au moins localement le passage annulaire (13) entre deux rondelles ressorts (7', 11'), dont l'une peut être insérée dans l'autre et contre lesquelles le ressort (6') ou les ressorts (5, 6 ; 6") est appuyé ou sont appuyés (Figs. 5 à 7).

4. Bloc-ressort pour le montage dans une garniture mécanique d'étanchéité pour gaine d'arbre ou cartouche pour le chargement axial de l'élément d'étanchéité, caractérisé en ce qu'il comporte un élément de maintien (9), qui maintient le ressort (6 ; 6', Figs. 3, 4, 7) ou les ressorts (5, 6 ; 6", Figs. 1, 2 ; 5, 6) en position comprimée et qui perd à une température prédéterminée sa force de maintien, de sorte que le ressort (6 ; 6") ou les ressorts (5, 6 ; 6") ne se détendent que lorsque cette température est atteinte.

5. Bloc-ressort selon la revendication 4, caractérisé en ce que dans un empilement de ressorts, s'il contient plusieurs ressorts (5, 6), les ressorts sont contigus les uns des autres par exemple avec leurs faces frontales (Fig. 1), et l'élément de maintien (9) est une colle liant les faces des ressorts (5, 6) les unes avec les autres, mais avec un seul ressort (6, Fig. 3, 4), la colle lie la face du ressort (6) avec un anneau porteur, qui forme le cas échéant la bague de serrage (7) de la garniture d'étanchéité.

6. Bloc-ressort selon la revendication 4 ou 5, caractérisé en ce qu'un boîtier en deux parties (7', 11') pour le logement du ressort (6') ou des ressorts (5, 6 ; 6") est prévu, qu'une partie du boîtier (7') est logée avec possibilité de coulisser dans l'autre partie de boîtier (11') et le moyen de maintien (9) est disposé sous la forme d'une colle, d'un alliage métallique en particulier eutectique ou d'un métal dans le passage annulaire (13) entre les deux parties de boîtier (7', 11') le cas échéant en des points discrets seulement du passage annulaire (13) et que le ressort (6') ou les ressorts (5, 6 ; 6") s'appuient contre chacune des parties de boîtier (7', 11') (Figs. 5-7)

7. Bloc-ressort selon la revendication 6, caractérisé en ce que les parties de boîtier (7', 11') sont en forme de coquille, le fond des coquilles présentant chacun un évidement (14) pour le passage de l'arbre (4) et le ressort (6') ou les ressorts s'appuyant sur le fond des coquilles (Fig. 7).

8. Bloc-ressort selon la revendication 6, caractérisé en ce qu'une partie de boîtier (11') est en forme de coquille et l'autre partie de boîtier (7') est un anneau (7) pouvant glisser dans la coquille (11), les ressorts (5, 6 ; 6") étant appuyés sur le fond de la coquille (11) pourvue d'un évidement (14) pour le passage de l'arbre (4) et sur l'anneau (7).

9. Bloc-ressort selon la revendication 8, caractérisé en ce que l'anneau (7) est pourvu d'une pluralité de trous borgnes (12) espacés les uns des autres sur la périphérie, dans lesquels sont introduits des ressorts à boudin (6"), qui dépassent par une extrémité de la face de l'anneau (7) dans laquelle débouchent les trous borgnes (12), et sont appuyés par cette extrémité sur le fond de la coquille (11') (Fig. 6).

10. Utilisation dans des garnitures mécaniques d'étanchéité pour gaine d'arbre ou cartouche pour le chargement de préférence axial de l'élément d'étanchéité d'un bloc-ressort maintenu à l'état comprimé par un élément de maintien, dans laquelle l'élément de maintien perd sa force de maintien à une température prédéterminée.

# FIG. 1

## FIG. 2

FIG.3

FIG.4

FIG.5

FIG.6

FIG.7

EP 0 219 490 B1